# EUROPÄISCHE PATENTSCHRIFT

(11) **EP 2 209 110 B1**
(45) Veröffentlichungstag und Bekanntmachung des Hinweises auf die Patenterteilung: **25.09.2013**
(21) Anmeldenummer: 09000479.7
(22) Anmeldetag: 15.01.2009
(51) Int. Cl.: G10K 9/13, G01H 11/02

(54) **Vibrationssensor**
Vibration sensor
Capteur de vibrations

(43) Veröffentlichungstag der Anmeldung: 21.07.2010
(73) Patentinhaber: VEGA Grieshaber KG, 77709 Wolfach (DE)
(72) Erfinder: Jacob, Jörn, 77709 Kirnbach (DE); Gruhler, Holger, 78609 Tuningen (DE); Fehrenbach, Josef, 77716 Haslach (DE); Mellert, Martin, 77790 Steinach (DE); Becherer, Frank, 77716 Haslach (DE)
(74) Vertreter: Patentanwälte Westphal, Mussgnug & Partner

(56) Entgegenhaltungen:
- WO-A-96/04645
- DE-A1- 4 404 020
- DE-A1-102006 016 355
- US-A- 3 974 499

## Beschreibung

Die Erfindung betrifft einen Vibrationssensor mit einem in Schwingung versetzbaren Tragelement, einer Wandlereinrichtung zum Versetzen des Tragelements in Schwingung gemäß Oberbegriff des Patentanspruchs 1.

Aus der DE 10 2006 016 355 A1 ist ein solcher Vibrationssensor bekannt, bei der die Wandlereinrichtung eine Erregerspule und einen Bolzen als Spulenkern aufweist. Der Bolzen ist mit einem als Membran ausgebildeten Tragelement zur Übertragung der Schwingungen direkt verbunden, wobei die Erregerspule und der Bolzen derart zusammenwirken, dass eine Schwingung des Bolzens einen Stromfluss in der Erregerspule induziert und/oder ein ein Magnetfeld induzierender Stromfluss in der Erregerspule eine Schwingung des Bolzens bewirkt. Der Bolzen ist aus magnetisierbarem Material gefertigt oder als Permanentmagnet ausgebildet.

Dieser bekannte Vibrationssensor ist mit einer Wandlereinrichtung versehen, die zur Verwendung als induktive Antriebseinheit nur eine geringe magnetische Kraft entwickelt, u. a. auch deshalb, da deren Aufbau zu Streufeldern außerhalb und innerhalb des Vibrationssensors führt.

Darüber hinaus ist aus US-A-3974499 eine Wandlereinrichtung mit Erregerspule an einer Membran festgelegten Spulenkern und Permanentmagnet bekannt. Die Wandlereinrichtung dient als Summer oder Hupe.

Aufgabe der Erfindung ist es, einen Vibrationssensor mit einer Wandlereinrichtung bereitzustellen, der die genannten Nachteile vermeidet und insbesondere auch für hohe Temperaturen geeignet ist.

Diese Aufgabe wird gelöst durch einen Vibrationssensor mit den Merkmalen des Patentanspruchs 1 oder des Patentanspruchs 2.

Ein solcher Vibrationssensor weist eine erfindungsgemäße Wandlereinrichtung auf, bei welcher der Bolzen zweiteilig aus einem Permanentmagneten und einem Spulenkern mit einem dazwischen angeordneten Luftspalt derart ausgebildet ist, dass der Luftspalt im Bereich der axialen Erstreckung der Erregerspule liegt.

Gemäß der ersten Lösung zur Übertragung der Schwingungen auf ein Schwingelement ist der Permanentmagnet mit dem Tragelement verbunden, wobei die mit dem Spulenkern verbundene Erregerspule und der Permanentmagnet derart zusammenwirkend angeordnet sind, dass eine Schwingung des Permanentmagneten einen Stromfluss in der Erregerspule induziert und/oder ein ein Magnetfeld induzierender Stromfluss in der Erregerspule eine Schwingung des Permanentmagneten bewirkt.

Gemäß der zweiten Lösung ist der mit der Erregerspule verbundene Spulenkern zur Übertragung der Schwingungen mit dem Tragelement verbunden, wobei die mit dem Spulenkern verbundene Erregerspule mit dem Permanentmagneten derart zusammenwirkend angeordnet sind, dass eine Schwingung des Spulenkerns einen Stromfluss in der Erregerwicklung induziert und/oder ein ein Magnetfeld induzierender Stromfluss in der Erregerspule eine Schwingung des Spulenkerns bewirkt.

Durch die erfindungsgemäße Anordnung eines Permanentmagneten, sozusagen als Teil des Spulenkerns der Erregerspule, wird eine hohe Antriebskraft in der Wandlereinrichtung im Vergleich zu einer Anordnung mit einem üblichen Spulenkern erreicht. Dies wird dadurch bewirkt, dass dieser Permanentmagnet einen Offset gegenüber einer Anordnung mit einem üblichen Spulenkern der Feldstärke H bewirkt, so dass der B-H-Verlauf in den Bereich mit der größeren Steigung gelangt, wodurch sich sowohl ein größeres B als auch ein größeres ΔB (bei einem ΔI) einstellt, mit der Folge, dass wegen F∼B² auch ΔF, also die Antriebskraft F entsprechend ansteigt.

Besonders hervorzuheben ist auch die Zweiteiligkeit der Wandlereinrichtung, wonach einmal die Erregerspule zusammen mit dem Spulenkern eine Einheit bilden und zum anderen auch der Permanentmagnet eine Einheit bildet, so dass einmal die Schwingungen zwischen dem Permanentmagneten und dem Tragelement bei feststehender Erregerspule übertragbar sind oder zum anderen die Schwingungen zwischen dem Spulenkern und dem Tragelement bei feststehendem Permanentmagneten übertragbar sind.

In einer Weiterbildung der Erfindung ist zur Bildung eines magnetischen Rückschlusses der Erregerspule eine die Erregerspule umschließende Spulenaufnahme vorgesehen, wodurch die Streufelder innerhalb und außerhalb des Vibrationssensors reduziert werden und infolgedessen auch die Antriebskraft steigt. Hierbei ist die Erregerspule fest in dieser Spulenaufnahme angeordnet, so dass entweder der Permanentmagnet gegenüber dieser ortsfesten Spulenaufnahme schwingt oder die Spulenaufnahme mit dem Spulenkern gegenüber dem ortsfesten Permanentmagneten schwingt.

Vorzugsweise ist diese Spulenaufnahme topfförmig mit einem Topfboden ausgebildet, wobei in einer zentrischen Bohrung des Topfbodens der Spulenkern gelagert ist. Damit wird eine kompakte Bauform aus Erregerspule, Spulenaufnahme und Spulenkern erzielt, wobei gleichzeitig ein hervorragender Rückschluss nicht nur im Bereich der zylindrischen Außenfläche der Erregerspule sichergestellt ist, sondern auch auf der zum Permanentmagneten abgewandten Stirnseite der Erregerspule.

Da die magnetischen Feldlinien immer den Verlauf mit dem geringsten magnetischen Widerstand nehmen, ist es natürlich von Vorteil, die Spulenaufnahme aus magnetisierbarem Material herzustellen.

In einer besonders bevorzugten Weiterbildung der Erfindung ist zur Bildung eines geschlossenen Magnetkreises zwischen dem freien Ende des Permanentmagneten, das dem Spulenkern gegenüberliegt, und der Spulenaufnahme eine Magnetaufnahme für dieses freie Ende des Permanentmagneten vorgesehen. Damit wird auch auf der dem Spulenkern gegenüberliegenden Seite des Permanentmagneten in optimaler Weise für die äußeren magnetischen Feldlinien ein Weg mit niedrigem magnetischem Widerstand angeboten, wodurch sich zusammen mit der Spulenaufnahme die magnetischen Streufelder minimieren lassen.

Auch bei dieser Weiterbildung ergibt sich eine Zweiteiligkeit des magnetischen Kreises der Wandlereinrichtung, die einerseits durch die Spulenaufnahme mit der Erregerspule und dem Spulenkern gebildet wird und andererseits durch die Magnetaufnahme mit dem Permanentmagneten.

Die Magnetaufnahme weist bevorzugt eine der Spulenaufnahme entsprechende zylindrische Grundform auf, so dass der zwischen der Spulenaufnahme und der Magnetaufnahme entstehende Luftspalt hinsichtlich der Antriebskraft optimiert werden kann.

Dabei ergibt sich eine besonders einfache Bauform dieser Magnetaufnahme, wenn gemäß einer weiteren Ausbildung der Erfindung diese Magnetaufnahme eine axiale zylindrische Ausnehmung zur Aufnahme des freien Endes des Permanentmagneten aufweist.

Zur Erniedrigung des magnetischen Widerstandes dieser Magnetaufnahme ist es natürlich vorteilhaft zu dessen Herstellung magnetisierbares Material zu verwenden.

Eine optimierte Position des Permanentmagneten stellt gemäß einer Weiterbildung der Erfindung eine Anordnung dar, bei welcher der Luftspalt zwischen dem Permanentmagnet und dem Spulenkern mittig hinsichtlich der axialen Erstreckung der Erregerspule angeordnet ist, d. h., der Permanentmagnet liegt mit einer seiner Polflächen mittig in der Erregerspule. Es hat sich in Versuchen gezeigt, dass dies hinsichtlich einer hohen Antriebskraft eine optimierte Position darstellt.

In einer Weiterbildung der Erfindung ist das Tragelement als Bodenplatte, vorzugsweise als Membran eines die Spulenaufnahme und die Magnetaufnahme aufnehmenden topfförmigen Gehäuses ausgebildet, wobei je nach Ausführung entweder die Spulenaufnahme oder die Magnetaufnahme fest mit dem Gehäuse verbunden ist.

Um eine gute Anbindung des jeweils verwendeten Teilsystems der Wandlereinrichtung zur Schwingungsübertragung auf die Bodenplatte bzw. die Membran zu gewährleisten, ist ein Verbindungselement vorgesehen, das entweder mit der Spulenaufnahme oder mit der Magnetaufnahme verbunden ist.

Um zu Verhindern, dass trotz des optimierten äußeren magnetischen Kreises Streufelder entstehen, sind in einer Weiterbildung der Erfindung das Gehäuse und das Tragelement, insbesondere die Membran, einschließlich des Schwingelements aus nichtmagnetisierbaren Material gefertigt.

Um den Vibrationssensor auch für hohe Temperaturen geeignet zu machen, sind zur Reduzierung eines Materialverzugs bei hohen Temperaturen das Schwingelement und/oder das Tragelement, insbesondere die Membran aus einem wärmebehandelten Material gefertigt. Hierdurch wird die thermische Hysterese wesentlich verringert. Die Wärmebehandlung kann als Lösungsglühen oder Spannungsarmglühen durchgeführt werden.

Die Erfindung wird nachfolgend anhand von Ausführungsbeispielen unter Bezugnahme auf die beigefügten Figuren ausführlich beschrieben. Es zeigen:
- Figur 1: eine schematische Darstellung des Grundprinzips eines erfindungsgemäßen Vibrationssensors gemäß einer ersten Ausführungsform,
- Figur 2: eine schematische Darstellung des Grundprinzips eines erfindungsgemäßen Vibrationssensors gemäß einer zweiten Ausführungsform,
- Figur 3: eine Längsschnittdarstellung eines erfindungsgemäßen Vibrationssensor gemäß der Ausführungsform nach Figur 1, und
- Figur 4: eine Längsschnittdarstellung eines weiteren Ausführungsbeispiels eines erfindungsgemäßen Vibrationssensors gemäß der Ausführungsform nach Figur 2.

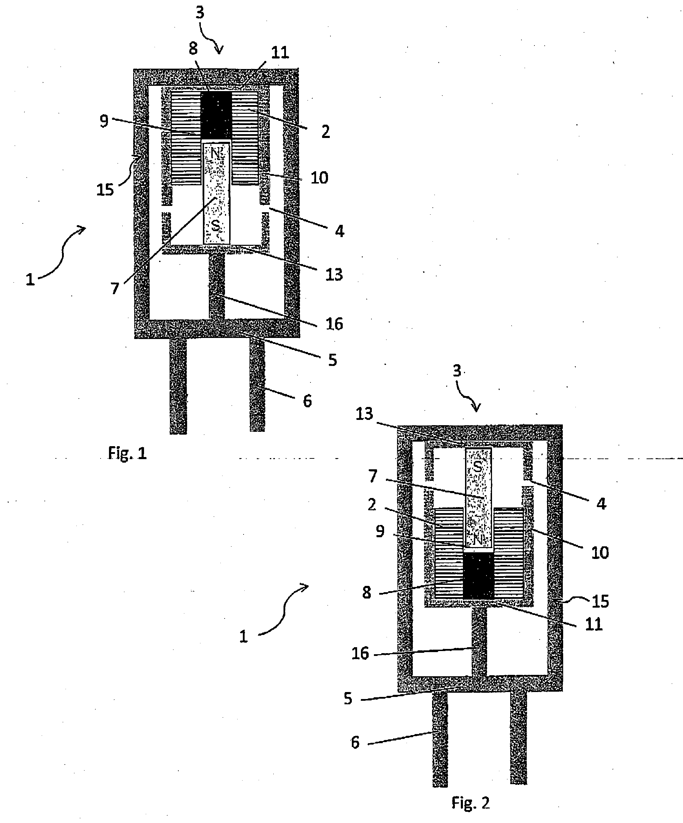

Mit den Figuren 1 und 2 wird zunächst anhand der schematischen Darstellungen das Grundprinzip eines erfindungsgemäßen Vibrationssensors bzw. dessen erfindungsgemäßen Aufbaus erläutert.

In den Figuren 1 und 2 bezeichnet die Bezugsziffer 3 bzw. 15 jeweils eine Wandlereinrichtung 3 bzw. ein Gehäuse 15 eines erfindungsgemäßen Vibrationssensors 1, wobei die beiden Wandlereinrichtungen 3 identisch aufgebaut sind.

Eine solche Wandlereinrichtung 3 umfasst eine Erregerspule 2 mit einer einen magnetischen Rückschluss bildenden topfförmigen Spulenaufnahme 10, wobei ausgehend vom Topfboden 11 dieser Spulenaufnahme ein Spulenkern 8 von der Erregerspule 2 umschlossen wird. In seiner Länge erstreckt sich der Spulenkern 8 ausgehend von seinem am Topfboden 11 der Spulenaufnahme 10 liegenden Ende bis ungefähr zur Mitte der Erregerspule 2. Unter Ausbildung eines Luftspalts 9 schließt sich ein Permanentmagnet 7 an, der sich über die dem Topfboden 11 der Spulenaufnahme 10 gegenüberliegende Stirnseite der Erregerspule 2 hinaus erstreckt und dort mit seinem freien Ende mit einer einen weiteren magnetischen Rückschluss bildenden Magnetaufnahme 13 verbunden ist. Dabei ist die Magnetaufnahme 13 derart ausgebildet, dass deren äußerer Durchmesser an den äußeren Durchmesser der Spulenaufnahme 10 angepasst ist und sich dadurch ein Luftspalt 4 zwischen der Spulenaufnahme 10 und der Magnetaufnahme 13 ausbilden kann. Hierdurch entsteht bei einer Bestromung der Erregerspule 2 ein geschlossener Magnetkreis, dessen im Permanentmagneten 7 und im Spulenkern 7 innerhalb der Erregerspule 2 verlaufenden Magnetfeldlinien sich außerhalb der Erregerspule 2 über die Spulenaufnahme 10 und die Magnetaufnahme 13 schließen.

Das in den Figuren 1 und 2 andeutungsweise dargestellte Gehäuse 15 umfasst ein als Membran ausgebildetes Tragelement 5 sowie ein mit diesem befestigtes aus Schwinggabeln bestehendes Schwingelement 6. Ferner stellt ein Verbindungselement 16 zur Übertragung der Schwingungen auf das Tragelement 5 und die Schwinggabel 6 eine Verbindung zwischen dem Tragelement 5 und der Wandlereinrichtung 3 her.

In Figur 1 bildet die Spulenaufnahme 10 mit der Erregerspule 2 und dem Spulenkern 8 eine Einheit; gegenüber dieser Einheit ist der Permanentmagnet 7 zusammen mit der Magnetaufnahme 13 schwingfähig, wobei zur Übertragung der Schwingungen entweder von der Magnetaufnahme 13 auf das Tragelement 5 bzw. das Schwingelement 6 oder in umgekehrter Richtung von dem Schwingelement 6 bzw. dem Tragelement 5 auf die Magnetaufnahme 13 das Verbindungselement 16 mit der Magnetaufnahme 13 verbunden ist.

Bei einer Bestromung der Erregerspule 2 mit Wechselstrom wird eine Schwingung des Permanentmagneten 7 bewirkt, indem dieser in der Art eines annähernd hälftig von der Erregerspule 2 umschlossenen Stößels sich axial hin und her bewegt. Diese Schwingung wird dann über das Verbindungselement 16 auf das Tragelement 5 und die Schwinggabeln 6 übertragen.

Umgekehrt wird eine Schwingung des Tragelements 5 bzw. der Schwinggabeln 6 auf den Permanentmagneten 7 übertragen, der aufgrund der axialen Hin- und Herbewegung einen entsprechenden Stromfluss in der Erregerspule 2 induziert.

Der Vibrationssensor nach Figur 2 unterscheidet sich von dem nach Figur 1 darin, dass in Bezug auf das Gehäuse 15 die Wandlereinrichtung 3 um 180° gedreht ist, so dass nunmehr das Verbindungselement 16 mit der Spulenaufnahme 10 fest verbunden ist.

Da nun der Permanentmagnet 7 mit der Magnetaufnahme 13 ortsfest gelagert ist, wird bei einer Bestromung der Erregerspule 2 mit Wechselstrom eine Schwingung der aus einer Einheit bestehenden Spulenaufnahme 10 mit Erregerspule 2 und Spulenkern 8 bewirkt, indem sich diese Einheit gegenüber dem Permanentmagneten 7 axial hin und her bewegt. Aufgrund der festen Verbindung der Spulenaufnahme 10 mit dem Tragelement 5 bzw. mit den Schwinggabeln 6 mittels des Verbindungselements 16 wird diese Schwingung auf das Tragelement 5 bzw. die Schwinggabeln 6 übertragen.

Auch in dieser Ausführungsform ist es möglich, Schwingungen des Tragelements 5 bzw. der Schwinggabeln 6 auf die Einheit aus Spulenaufnahme 10 mit Erregerspule 2 und Spulenkern 8 zu übertragen, wodurch aufgrund der relativen Bewegung zwischen der Erregerspule 2 und dem Permanentmagneten 7 in der Erregerspule 2 ein Strom induziert wird.

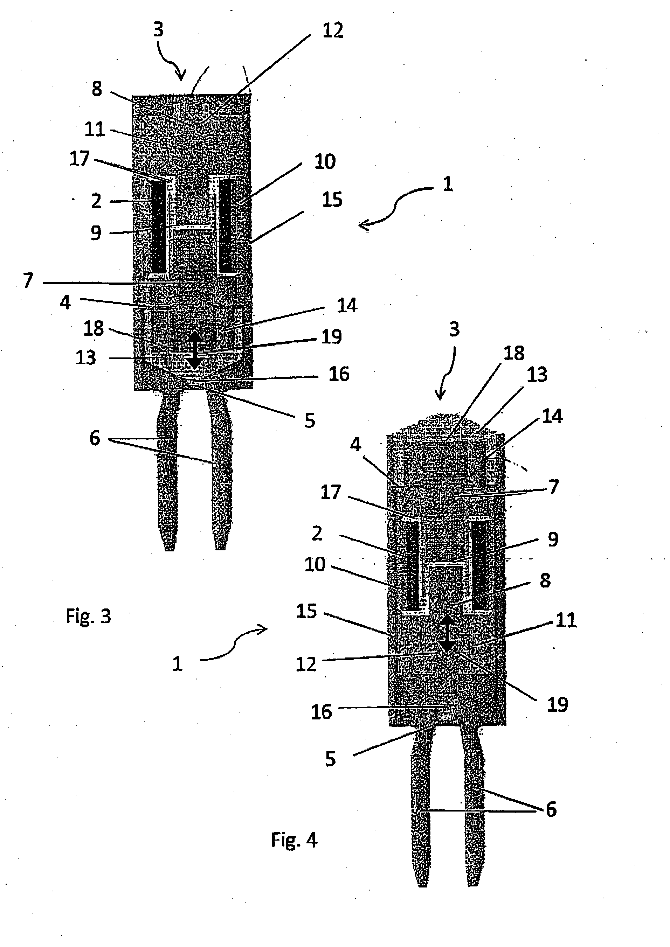

Figuren 3 und 4 zeigen nun den mechanischen Aufbau solcher Vibrationssensoren 1, wobei der Vibrationssensor 1 nach Figur 3 bzw. Figur 4 prinzipiell dem Aufbau nach Figur 1 bzw. Figur 2 entspricht.

Nach Figur 3 als auch nach Figur 4 ist in einem vorzugsweise zylindrischen Gehäuse 15, das an seinem einen stirnseitigen Ende durch ein als Membran oder Bodenplatte ausgebildetes Tragelement 5 verschlossen ist, eine Wandlereinrichtung 3 angeordnet. Die Membran 5 ist hinsichtlich Dimensionierung, Befestigung und/oder Material schwingungsfähig ausgebildet. Vorzugsweise, aber nicht erforderlich, stehen von der Membran 5 Schwinggabeln 6 ab, welche eine Schwingung der Membran auf einen die Schwinggabeln 6 umgebenden Raum übertragen. Zusätzlich oder alternativ ist auch eine Übertragung von Schwingungen aus Richtung des Raums über die Schwinggabeln 6 auf die Membran 5 möglich, um die Membran 5 in entsprechende Schwingungen zu versetzen.

Wenn auf die Schwinggabeln 6 verzichtet wird, ist die Membran 5 derart ausgestaltet, dass Schwingungen der Membran 5 direkt von dieser in den umgebenden Raum übertragen werden können bzw. aus dem umgebenden Raum empfangen werden können.

Gemäß Figur 3 besteht die im Innenraum des Gehäuses 15 angeordnete Wandlereinrichtung 3 aus einer topfförmigen Spulenaufnahme 15, die in ihrem hohlzylindrischen Innenraum eine auf einem Spulenkörper 17 gewickelte Erregerspule 2 aufnimmt. Die Spulenaufnahme 10 ist derart in dem Gehäuse 15 angeordnet, dass deren von einem Topfboden 11 verschlossenen Stirnseite die zur Membran 5 gegenüberliegenden Stirnseite des Gehäuses 15 verschließt. Diese Spulenaufnahme 10 ist über ihre Außenumfangsfläche mit der Innenfläche des Gehäuses 15 fest verbunden.

Die Erregerspule 2 ist über ihre Außenumfangsfläche und der Innenfläche der Spulenaufnahme 10 in derselben fixiert und liegt mit ihrer einen Stirnseite direkt benachbart am Topfboden 11 der Spulenaufnahme 10 an. Die Spulenaufnahme 10 weist in ihrem Topfboden 11 eine zentrale Bohrung 12 auf, in der ein Spulenkern 8 gelagert ist und der sich bis ungefähr in die Mitte der Erregerspule 2 axial erstreckt. Der vorzugsweise mit kreisförmigen Querschnitt ausgebildete Spulenkern 8 weist im Bereich der Erregerspule 2 einen größeren Querschnitt auf als im Bereich des Topfbodens 11 der Spulenaufnahme 10. Im Übergangsbereich der beiden Durchmesser befindet sich ein kragenförmiger Anschlag, der in eine ringförmige Nut des Topfbodens liegt. Der sich von diesem Anschlag aus fortsetzende Teil des Spulenkerns 8 wird in der Spulenaufnahme 10 fixiert und erstreckt sich über den Topfboden 12 hinaus bis an die Stirnseite des Gehäuses 15.

In ihrer axialen Erstreckung reicht die Erregerspule 2 nicht bis an die zur Membran 5 benachbarte Stirnseite der Spulenaufnahme 10.

Zwischen dieser Stirnseite der Spulenaufnahme 10 und der Membran 5 ist eine über ein Verbindungselement 16 mit der Membran 5 verbundene Magnetaufnahme 13 angeordnet und dient zur Aufnahme eines Permanentmagneten 7. Diese Magnetaufnahme 13 ist ebenfalls topfförmig mit einer zylindrischen Ausnehmung 14 ausgebildet, in der eine an der Bodenfläche dieser zylindrischen Ausnehmung 14 anliegende Hülse 18 den Permanentmagneten 7 aufnimmt und gleichzeitig fixiert.

Diese Magnetaufnahme 13 ist zusammen mit dem Permanentmagneten 7 in dem Gehäuse mittels eines von der Erregerspule 2 erzeugbaren Magnetfeldes beweglich in Richtung des Pfeils 19 in dem Gehäuse 15 gelagert, indem ein geringer Spalt zwischen der Außenumfangsfläche der Magnetaufnahme 13 und der Innenumfangsfläche des Gehäuses 15 vorgesehen ist.

Die axiale Erstreckung der Magnetaufnahme 13 und des Permanentmagneten 7 ist derart aufeinander abgestimmt, dass bei nicht bestromter Erregerspule 2 ein erster Luftspalt 9 zwischen den gegenüberliegenden Polflächen der Permanentmagneten 7 und des Spulenkerns 8 sowie ein zweiter Luftspalt 4 zwischen den Stirnflächen der Spulenaufnahme 10 und der Magnetaufnahme 13 entstehen. Hierzu ist insbesondere der äußere Durchmesser der Magnetaufnahme 13 an den äußeren Durchmesser der Spulenaufnahme 10 angepasst.

Bei einer Bestromung der Erregerspule 2 als Antriebseinheit mit Wechselstrom baut sich ein Magnetfeld auf, dessen magnetischen Feldlinien nahezu vollständig in einem geschlossenen Magnetkreis geführt werden, der innerhalb der Erregerspule 2 aus dem Permanentmagneten 7 und dem Spulenkern 8 besteht und im Außenraum über den Topfboden 11 der Spulenaufnahme 10, deren die Erregerspule 2 umschließenden zylindrischen Wände und über den zweiten Luftspalt 4 sich über die zylindrischen Wände der Magnetaufnahme 13 und dessen Boden wieder schließt. Um in diesem Magnetkreis den magnetischen Widerstand möglichst gering zu halten, sind der Spulenkern 8, die Spulenaufnahme 10 sowie die Magnetaufnahme 13 aus magnetisierbarem, insbesondere ferromagnetischem Material gefertigt.

Infolge dieser Bestromung der Erregerspule 2 wird die Einheit aus Magnetaufnahme 13 und Permanentmagnet 7 in axiale Schwingungen versetzt, wie dies mit dem Pfeil 19 angedeutet ist. Diese Schwingungen werden über das Verbindungselement 16 auf die Membran 5 und die Schwinggabeln 6 übertragen.

Durch den beschriebenen geschlossenen Magnetkreis wird eine hohe Anzugskraft im Bereich der in der Erregerspule 2 gegenüberliegenden und den ersten Luftspalt 9 bildenden Polflächen des Permanentmagneten 7 und des Spulenkerns 8 sowie an den den zweiten Luftspalt 4 bildenden Stirnflächen erreicht, wobei dieser Effekt auch durch die geringen magnetischen Streufelder unterstützt wird, da die magnetischen Feldlinien den Verlauf mit dem geringsten magnetischen Widerstand nehmen, der mit dem geschlossenen magnetkreis gegeben ist. Ferner trägt hierzu auch die Verwendung eines Permanentmagneten mit hoher Remanenz bei.

Die Anpassung der Querschnitte der an dem ersten und zweiten Luftspalt 9 und 4 beteiligten Querschnittsflächen führt zu einer konstanten Feldliniendichte in dem geschlossenen Magnetkreis, mit der Folge einer weiteren Erhöhung der magnetischen Kraft im Bereich dieser Luftspalte 9 und 4.

Eine weitere Minimierung der Streufelder ergibt sich durch die Verwendung von nichtmagnetisierbaren Materialien für das Gehäuse 15 und das Verbindungselement 16.

Weiterhin ist es mit dem erfindungsgemäßen Aufbau möglich, den ersten und zweiten Luftspalt 9 und 4 auf eine minimale Luftspaltbreite einzustellen, vorzugsweise liegt diese Breite bei ca. 0,5 mm.

Umgekehrt kann der Vibrationssensor 1 auch derart betrieben werden, dass von dem Außenraum Schwingungen über die Schwinggabeln 6 oder die Membran 5 auf die aus der Magnetaufnahme 13 und dem Permanentmagneten 7 bestehenden Einheit übertragen werden, die in der Erregerspule 2 einen entsprechenden Strom induzieren.

Der Vibrationssensor 1 nach Figur 4 entspricht in seinem Grundprinzip der Darstellung nach Figur 2 und zeigt einen Aufbau, der sich gegenüber demjenigen nach Figur 3 darin unterscheidet, dass die im Zusammenhang mit der Figur 3 beschriebene Wandlereinrichtung 3 in einer um 180° gedrehten Lage in einem Gehäuse 15 eingebaut ist. Im Folgenden wird daher nur auf die Unterschiede eingegangen und im Zusammenhang mit der Beschreibung der Figur 4 von einer bereits beschriebenen Wandlereinrichtung 3 ausgegangen.

Bei dem Vibrationssensor 1 nach Figur 4 befinden sich auf der der Membran 2 gegenüberliegenden Stirnseite des Gehäuses 15 die Magnetaufnahme 13 sowie der in dieser Magnetaufnahme 13 fixierte Permanentmagnet 7, wodurch das Gehäuse 15 durch die äußere Bodenfläche der Magnetaufnahme 13 verschlossen wird.

Ferner ist die Magnetaufnahme 13 über ihre äußere Umfangsfläche fest mit der Innenumfangsfläche des Gehäuses 15 verbunden.

Gegenüber dieser in dem Gehäuse 15 fixierten Einheit aus Magnetaufnahme 13 und Permanentmagnet 7 ist die Spulenaufnahme 10 in axialer Richtung beweglich in dem Gehäuse 15 gelagert, so dass entsprechend des Pfeils 19 bei einer Bestromung der Erregerspule 2 mit Wechselstrom die Spulenaufnahme 10 sowie die damit fest verbundene Erregerspule 2 einschließlich des Spulenkerns 8 eine Schwingung ausführen, die über ein mit dem Spulenkern 8 verbundenes Verbindungselement 16 auf die Membran 5 und die Schwinggabeln 6 übertragen werden.

Hierzu ist die Spulenaufnahme 10 hinsichtlich deren Außendurchmesser derart ausgebildet, dass zwischen der Umfangsfläche der Spulenaufnahme 10 und der Innenumfangsfläche des Gehäuses 15 ein eine axiale Bewegung der Spulenaufnahme 10 zulassender Spalt entsteht.

Die im Zusammenhang mit dem Vibrationssensor 1 nach Figur 3 beschriebenen Vorteile sowie vorteilhafte Ausgestaltung hinsichtlich Verwendung von geeigneten Materialien gelten auch für den Vibrationssensor 1 nach Figur 4.

Dies betrifft insbesondere die hohe Anzugskraft im Bereich der Luftspalte 4 und 9 aufgrund des geschlossenen Magnetkreises sowie der Verwendung von magnetisierbaren, insbesondere ferromagnetischer Materialien für die diesen Magnetkreis bildende Spulenaufnahme 10, einschließlich des Spulenkerns 8 und der Magnetaufnahme 13. Ebenso lassen sich zwecks Krafterhöhung die Luftspalte 4 und 9 minimieren und zusätzlich auch die an diesen Luftspalten 4 und 9 beteiligten Querschnittflächen anpassen. Schließlich werden auch für das Gehäuse 15 und das Verbindungselement 16 nichtmagnetisierbare Materialien verwendet.

Anstelle der Verwendung als Antriebseinheit kann der Vibrationssensor 1 gemäß Figur 4 auch derart eingesetzt werden, dass von dem Außenraum Schwingungen über die Schwinggabeln 6 oder die Membran 5 auf die aus der Spulenaufnahme 10, der Erregerspule 2 und des Spulenkerns 8 bestehenden Einheit übertragen werden, die in der Erregerspule 2 einen entsprechenden Strom induzieren.

Um sowohl den Vibrationssensor 1 nach Figur 3 als auch nach Figur 4 für hohe Temperaturen einsetzbar zu machen, werden die Membran 5 als auch die Schwinggabeln 6 einer Wärmebehandlung unterzogen, um eine thermische Hysterese hinsichtlich Materialverzug zu minimieren. Dies kann mittels Lösungsglühen oder Spannungsglühen durchgeführt werden.

Um über einen großen Temperaturbereich eine hohe Frequenzstabilität zu erzielen, kann die Temperatur der Erregerspule 2 beispielsweise durch Widerstandsmessung oder durch ein Thermoelement gemessen und damit eine Kompensation von Temperaturschwankungen realisiert werden.

### Bezugszeichenliste

- 1: Vibrationssensor
- 2: Erregerspule
- 3: Wandlereinrichtung
- 4: Luftspalt
- 5: Membran
- 6: Schwingelement
- 7: Permanentmagnet
- 8: Spulenkern
- 9: Luftspalt
- 10: Spulenaufnahme
- 11: Topfboden der Spulenaufnahme 10
- 12: Bohrung im Topfboden 11
- 13: Magnetaufnahme
- 14: zylindrische Ausnehmung in der Magnetaufnahme 13
- 15: Gehäuse
- 16: Verbindungselement
- 17: Spulenkörper
- 18: Hülse zur Befestigung des Permanentmagneten 7
- 19: Richtungspfeil

## Patentansprüche

1. Vibrationssensor (1) mit
- einem in Schwingung versetzbaren Tragelement (5),
- einer eine Erregerspule (2) aufweisende Wandlereinrichtung (3) zum Versetzen des Tragelements (5) in Schwingung und/oder zum Abgreifen einer Schwingung des Tragelements (5),
- einem in der Erregerspule (2) gelagerten Bolzen,
- einem Schwingelement (6) und/oder einem als Schwingelement ausgebildeten Tragelement (5) zum Übertragen der Schwingungen von dem Tragelement (5) in einen umgebenden Raum und/oder aus einem umgebenden Raum auf das Tragelement (5),
**dadurch gekennzeichnet, dass**
- der Bolzen mit einem Permanentmagneten (7) und einem mit der Erregerspule (2) verbundenen Spulenkern (8) zweiteilig ausgebildet ist,
- wobei ein zwischen dem Permanentmagneten (7) und dem Spulenkern (8) angeordneter Luftspalt (9) im Bereich der axialen Erstreckung der Erregerspule (2) liegt,
- der Permanentmagnet (7) zur Übertragung der Schwingungen mit dem Tragelement (5) verbunden ist, und
- die Erregerspule (2) und der Permanentmagnet (7) derart zusammenwirkend angeordnet sind, dass eine Schwingung des Permanentmagneten (7)einen Stromfluss in der Erregerspule (2) induziert und/oder ein ein Magnetfeld induzierender Stromfluss in der Erregerspule (2) eine Schwingung des Permanentmagneten (7) bewirkt.

2. Vibrationssensor (1) mit
- einem in Schwingung versetzbaren Tragelement (5),
- einer eine Erregerspule (2) aufweisende Wandlereinrichtung (3) zum Versetzen des Tragelements (5) in Schwingung und/oder zum Abgreifen einer Schwingung des Tragelements (5),
- einem in der Erregerspule (2) gelagerten Bolzen,
- mit einem Schwingelement (6) und/oder einem als Schwingelement ausgebildeten Tragelement (5) zum Übertragen der Schwingungen von dem Tragelement (5) in einen umgebenden Raum und/oder aus einem umgebenden Raum auf das Tragelement (5),
**dadurch gekennzeichnet, dass**
- der Bolzen mit einem Permanentmagneten (7) und einem mit der Erregerspule (2) verbundenen Spulenkern (8) zweiteilig ausgebildet ist,
- wobei ein zwischen dem Permanentmagneten (7) und dem Spulenkern (8) angeordneter Luftspalt (9) im Bereich der axialen Erstreckung der Erregerspule (2) liegt,
- der Spulenkern (8) zur Übertragung der Schwingungen mit dem Tragelement (5) verbunden ist, und
- die Erregerspule (2) und der Permanentmagnet (7) derart zusammenwirkend angeordnet sind, dass eine Schwingung des Spulenkerns (8) einen Stromfluss in der Erregerwicklung (2) induziert und/oder ein ein Magnetfeld induzierender Stromfluss in der Erregerspule (2) eine Schwingung des Spulenkerns (8) bewirkt.

3. Vibrationssensor (1) nach Anspruch 1 oder 2,
**dadurch gekennzeichnet, dass** zur Bildung eines magnetischen Rückschlusses der Erregerspule (2) eine die Erregerspule (2) umschließende Spulenaufnahme (10) vorgesehen ist.

4. Vibrationssensor (1) nach Anspruch 3,
**dadurch gekennzeichnet, dass** die Spulenaufnahme (10) topfförmig mit einem Topfboden (11) ausgebildet ist, wobei in einer zentrischen Bohrung (12) des Topfbodens (11) der Spulenkern (8) gelagert ist.

5. Vibrationssensor (1) nach Anspruch 3 oder 4,
**dadurch gekennzeichnet, dass** die Spulenaufnahme (10) aus magnetisierbaren Material gebildet ist.

6. Vibrationssensor (1) nach einem der Ansprüche 3 bis 5, **dadurch gekennzeichnet, dass** zur Bildung eines geschlossenen Magnetkreises zwischen dem dem Spulenkern (8) gegenüberliegenden freien Ende des Permanentmagneten (7) und der Spulenaufnahme (10) eine Magnetaufnahme (13) für dieses freie Ende des Permanentmagnet (7) vorgesehen ist.

7. Vibrationssensor (1) nach Anspruch 6,
**dadurch gekennzeichnet, dass** die Magnetaufnahme (13) eine der Spulenaufnahme (10) entsprechende zylindrische Grundform aufweist.

8. Vibrationssensor (1) nach Anspruch 6 oder 7,
**dadurch gekennzeichnet, dass** die Magnetaufnahme (13) eine axiale zylindrische Ausnehmung (14) zur Aufnahme des freien Endes des Permanentmagneten (7) aufweist.

9. Vibrationssensor (1) nach einem der Ansprüche 6 bis 8, **dadurch gekennzeichnet, dass** die Magnetaufnahme (13) aus magnetisierbaren Material gebildet ist.

10. Vibrationssensor (1) nach einem der vorhergehenden Ansprüche,
**dadurch gekennzeichnet, dass** der Luftspalt (9) zwischen dem Permanentmagnet und dem Spulenkern (8) mittig hinsichtlich der axialen Erstreckung der Erregerspule (2) angeordnet ist.

11. Vibrationssensor (1) nach einem der vorhergehenden Ansprüche,
**dadurch gekennzeichnet, dass** das Tragelements (5) als Bodenplatte eines die Spulenaufnahme (10) und die Magnetaufnahme (13) aufnehmenden topfförmigen Gehäuse (15) ausgebildet ist.

12. Vibrationssensor (1) nach Anspruch 11,
**dadurch gekennzeichnet, dass** die Bodenplatte (5) als Membran ausgebildet ist.

13. Vibrationssensor (1) nach einem der Ansprüche 1, und 3 bis 12,
**dadurch gekennzeichnet, dass** dass das Tragelements (5) über ein Verbindungselement (16) mit der Spulenaufnahme (10) verbunden ist.

14. Vibrationssensor (1) nach einem der Ansprüche 2 und 6 bis 12,
**dadurch gekennzeichnet, dass** dass das Tragelements (5) über ein Verbindungselement (16) mit der Magnetaufnahme (13) verbunden ist.

15. Vibrationssensor (1) nach einem der vorhergehenden Ansprüche,
**dadurch gekennzeichnet, dass** das Gehäuse (15), das Tragelement (5) sowie das Schwingelement (6) aus nichtmagnetisierbaren Material gefertigt sind.

16. Vibrationssensor (1) nach einem der vorhergehenden Ansprüche,
**dadurch gekennzeichnet, dass** zur Reduzierung eines Materialverzugs bei hohen Temperaturen das Schwingelement (6) und/oder das Tragelement (5) aus einem wärmebehandelten Material gefertigt sind.

## Claims

1. A vibration sensor (1) with
- a carrier element (5) capable of being set in oscillation,
- a transducer device (3) having an excitation coil (2) for setting the carrier element (5) in oscillation and/or for tapping an oscillation of the carrier element (5),
- a pin mounted in the excitation coil (2),
- an oscillation element (6) and/or a carrier element (5) designed in the form of an oscillation element for transmitting the oscillations from the carrier element (5) to a surrounding space and/or from a surrounding space to the carrier element (5), **characterized in that**
- the pin is formed in two parts with a permanent magnet (7) and a coil core (8) connected to the excitation coil (2),
- wherein an air gap (9) arranged between the permanent magnet (7) and the coil core (8) is situated in the region of the axial extension of the excitation coil (2),
- the permanent magnet (7) is connected to the carrier element (5) in order to transmit the oscillations, and
- the excitation coil (2) and the permanent magnet (7) are arranged so as to cooperate in such a way that an oscillation of the permanent magnet (7) induces a current flow in the excitation coil (2) and/or a current flow inducing a magnetic field in the excitation coil (2) produces an oscillation of the permanent magnet (7).

2. A vibration sensor (1) with
- a carrier element (5) capable of being set in oscillation,
- a transducer device (3) having an excitation coil (2) for setting the carrier element (5) in oscillation and/or for tapping an oscillation of the carrier element (5),
- a pin mounted in the excitation coil (2),
- with an oscillation element (6) and/or a carrier element (5) designed in the form of an oscillation element for transmitting the oscillations from the carrier element (5) to a surrounding space and/or from a surrounding space to the carrier element (5), **characterized in that**
- the pin is formed in two parts with a permanent magnet (7) and a coil core (8) connected to the excitation coil (2),
- wherein an air gap (9) arranged between the permanent magnet (7) and the coil core (8) is situated in the region of the axial extension of the excitation coil (2),
- the coil core (8) is connected to the carrier element (5) in order to transmit the oscillations, and
- the excitation coil (2) and the permanent magnet (7) are arranged so as to co-operate in such a way that an oscillation of the coil core (8) induces a current flow in the excitation coil (2) and/or a current flow inducing a magnetic field in the excitation coil (2) produces an oscillation of the coil core (8).

3. A vibration sensor (1) according to claim 1 or 2, **characterized in that** a coil receiving means (10) surrounding the excitation coil (2) is provided in order to form a magnetic yoke of the excitation coil (2).

4. A vibration sensor (1) according to claim 3, **characterized in that** the coil receiving means (10) is designed in the form of a cup with a base (11), wherein the coil core (8) is mounted in a central bore (12) of the cup base (11).

5. A vibration sensor (1) according to claim 3 or 4, **characterized in that** the coil receiving means (10) is formed from magnetizable material.

6. A vibration sensor (1) according to any one of claims 3 to 5, **characterized in that** a magnet receiving means (13) for the free end of the permanent magnet (7) opposite the coil core (8) is provided in order to form a closed magnetic circuit between this free end of the permanent magnet (7) and the coil receiving means (10).

7. A vibration sensor (1) according to claim 6, **characterized in that** the magnet receiving means (13) has a cylindrical basic shape corresponding to the coil receiving means (10).

8. A vibration sensor (1) according to claim 6 or 7, **characterized in that** the magnet receiving means (13) has an axial cylindrical recess (14) for receiving the free end of the permanent magnet (7).

9. A vibration sensor (1) according to any one of claims 6 to 8, **characterized in that** the magnet receiving means (13) is formed from magnetizable material.

10. A vibration sensor (1) according to any one of the preceding claims, **characterized in that** the air gap (9) is arranged between the permanent magnet and the coil core (8) centrally with respect to the axial extension of the excitation coil (2).

11. A vibration sensor (1) according to any one of the preceding claims, **characterized in that** the carrier element (5) is designed in the form of a base plate of a cup-shaped housing (15) receiving the coil receiving means (10) and the magnet receiving means (13).

12. A vibration sensor (1) according to claim 11, **characterized in that** the base plate (5) is designed in the form of a diaphragm.

13. A vibration sensor (1) according to any one of claims 1 and 3 to 12, **characterized in that** the carrier element (5) is connected to the coil receiving means (10) by way of a connecting element (16).

14. A vibration sensor (1) according to any one of claims 2 and 6 to 12, **characterized in that** the carrier element (5) is connected to the magnet receiving means (13) by way of a connecting element (16).

15. A vibration sensor (1) according to any one of the preceding claims, **characterized in that** the housing (15), the carrier element (5) and the oscillation element (6) are produced from non-magnetizable material.

16. A vibration sensor (1) according to any one of the preceding claims, **characterized in that** the oscillation element (6) and/or the carrier element (5) are produced from a heat-treated material in order to reduce distortion of the material at high temperatures.

## Revendications

1. Capteur de vibrations (1) comprenant :
- un élément support (5) susceptible d'osciller,
- un dispositif convertisseur (3) équipé d'une bobine d'excitation (2) pour faire osciller l'élément support (5) et/ou pour régler l'oscillation de l'élément support (5),
- un axe logé dans la bobine d'excitation (2),
- un élément oscillant (6) et/ou un élément support (5) réalisé sous la forme d'un élément oscillant pour transmettre les oscillations de l'élément support (5) dans un volume environnant et/ou d'un volume environnant sur l'élément support (5),
**caractérisé en ce que**
- l'axe est réalisé en deux parties et comporte un aimant permanent (7) et un noyau de bobine (8) relié à la bobine d'excitation (2),
- un intervalle (9) entre l'aimant permanent (7) et le noyau de bobine (8) est situé dans la zone de l'extension axiale de la bobine d'excitation (2),
- l'aimant permanent (7) est relié à l'élément support (5) pour permettre la transmission des oscillations, et
- la bobine d'excitation (2) et l'aimant permanent (7) sont montés de façon à coopérer de sorte qu'une oscillation de l'aimant permanent (7) induise un courant dans la bobine d'excitation (2) et/ou qu'un courant dans la bobine d'excitation (2) induisant un champ magnétique provoque une oscillation de l'aimant permanent (7).

2. Capteur de vibrations (1) comprenant :
- un élément support (5) susceptible d'osciller,
- un dispositif convertisseur (3) équipé d'une bobine d'excitation (2) pour faire osciller l'élément support (5) et/ou pour régler l'oscillation de l'élément support (5),
- un axe logé dans la bobine d'excitation (2),
- un élément oscillant (6) et/ou un élément support (5) réalisé sous la forme d'un élément oscillant pour transmettre les oscillations de l'élément support (5) dans un volume environnant et/ou d'un volume environnant sur l'élément support (5),
**caractérisé en ce que**
- l'axe est réalisé en deux parties et comporte un aimant permanent (7) et un noyau de bobine (8) relié à la bobine d'excitation (2),
- un intervalle (9) entre l'aimant permanent (7) et le noyau de bobine (8) et situé dans la zone de l'extension axiale de la bobine d'excitation (2),
- le noyau de bobine (8) est relié à l'élément support (5) pour permettre la transmission des oscillations, et
- la bobine d'excitation (2) et l'aimant permanent (7) sont montés de façon à coopérer de sorte qu'une oscillation du noyau de bobine (8) induise un courant dans la bobine d'excitation (2) et/ou qu'un courant induisant un champ magnétique dans la bobine d'excitation (2) provoque une oscillation du noyau de bobine (8).

3. Capteur de vibrations (1) conforme à la revendication 1 ou 2, **caractérisé en ce que**
pour former une culasse magnétique de la bobine d'excitation (2) il est prévu un logement de réception (10) de la bobine entourant la bobine d'excitation (2).

4. Capteur de vibrations (1) conforme à la revendication 3,
**caractérisé en ce que**
le logement de réception (10) de la bobine est réalisé en forme de pot et comporte un corps de pot (11), le noyau de bobine (8) étant logé dans un perçage central (12) du corps de pot (11).

5. Capteur de vibrations (1) conforme à la revendication 3 ou 4, **caractérisé en ce que**
le logement de réception (10) de la bobine est réalisé en un matériau magnétisable.

6. Capteur de vibrations (1) conforme à l'une des revendications 3 à 5, **caractérisé en ce que**
pour former un circuit magnétique fermé il est prévu entre l'extrémité libre de l'aimant permanent (7) située à l'opposé du noyau de bobine (8) et le logement de réception (10) de la bobine, un logement de réception (13) de cette extrémité libre de l'aimant permanent (7).

7. Capteur de vibrations (1) conforme à la revendication 6,
**caractérisé en ce que**
le logement de réception (13) de l'aimant présente une forme fondamentale cylindrique correspondant au logement de réception (10) de la bobine.

8. Capteur de vibrations (1) conforme à la revendication 6 ou 7, **caractérisé en ce que**
le logement de réception (13) de l'aimant comporte un évidement cylindrique axial (14) pour la réception de l'extrémité libre de l'aimant permanent (7).

9. Capteur de vibrations (1) conforme à l'une des revendications 6 à 8, **caractérisé en ce que**
le logement de réception (13) de l'aimant est réalisé en un matériau magnétisable.

10. Capteur de vibrations (1) conforme à l'une des revendications précédentes,
**caractérisé en ce que**
l'intervalle (9) entre l'aimant permanent et le noyau de bobine (8) est centré par rapport à l'extension axiale de la bobine d'excitation (2).

11. Capteur de vibrations (1) conforme à l'une des revendications précédentes,
**caractérisé en ce que**
l'élément support (5) est réalisé sous la forme d'une plaque de fond d'un boitier en forme de pot (15) recevant le logement de réception (10) de la bobine et le logement de réception (13) de l'aimant.

12. Capteur de vibrations (1) conforme à la revendication 11, **caractérisé en ce que**
la plaque de fond (5) est réalisée sous la forme d'une membrane.

13. Capteur de vibrations (1) conforme à l'une des revendications 1 et 3 à 12,
**caractérisé en ce que**
l'élément support (5) est relié au logement de réception (10) de la bobine par l'intermédiaire d'un élément de liaison (16).

14. Capteur de vibrations (1) conforme à l'une des revendications 2 et 6 à 12,
**caractérisé en ce que**
l'élément support (5) est relié au logement de réception (13) de l'aimant par l'intermédiaire d'un élément de liaison (16).

15. Capteur de vibrations (1) conforme à l'une des revendications précédentes,
**caractérisé en ce que**
le boitier (15), l'élément support (5) ainsi que l'élément oscillant (6) sont réalisés en un matériau non magnétisable.

16. Capteur de vibrations (1) conforme à l'une des revendications précédentes,
**caractérisé en ce que**
pour réduire la déformation du matériau à température élevée, l'élément oscillant (6) et/ou l'élément support (5) est(sont) réalisé(s) en un matériau ayant subi un traitement thermique.
